# EUROPEAN PATENT APPLICATION

(11) **EP 1 840 754 A2**
(43) Date of publication of application: **03.10.2007**
(21) Application number: 07006542.0
(22) Date of filing: 29.03.2007
(51) Int. Cl.: G06F 15/177

(54) **Information processing device**

(30) Priority: 30.03.2006 JP 2006094732
(71) Applicant: Pioneer Corporation, Tokyo 153-8654 (JP)
(72) Inventor: Ando, Masanori, Ohta-ku Tokyo 143-8564 (JP); Ota, Yoshitaka, Ohta-ku Tokyo 143-8564 (JP); Ando, Hiroshi, Ohta-ku Tokyo 143-8564 (JP)
(74) Representative: HOFFMANN EITLE

(57) **Abstract**

The information processing device includes a plurality of integrated circuits (100, 200) that are interconnected via an external bus (400). Each of the integrated circuits is structured to be connectable via an internal bus (106, 206) to a CPU (102, 202), a user logic (104, 204), and a bridge (108, 208). One integrated circuit is set as a master integrated circuit (100), which controls other integrated circuits, and the other integrated circuits are set as slave integrated circuits (200). CPUs (202) of the slave integrated circuits (200) are set in a reset state. Only the CPU (102) of the master integrated circuit (100) can be boot, and it controls the user logic (204) of the slave integrated circuit (200) via the bridge (208) of the slave integrated circuit (200) and the external bus (400).

## Description

### BACKGROUND OF THE INVENTION

### 1. Field of the Invention

The present invention generally relates to an information processing device. The present invention specifically relates to the information processing device that includes a plurality of integrated circuits that are interconnected via an external bus and each of which is structured to be connectable via an internal bus to a central processing unit (CPU), a user logic, and a bridge.

### 2. Description of the Related Art

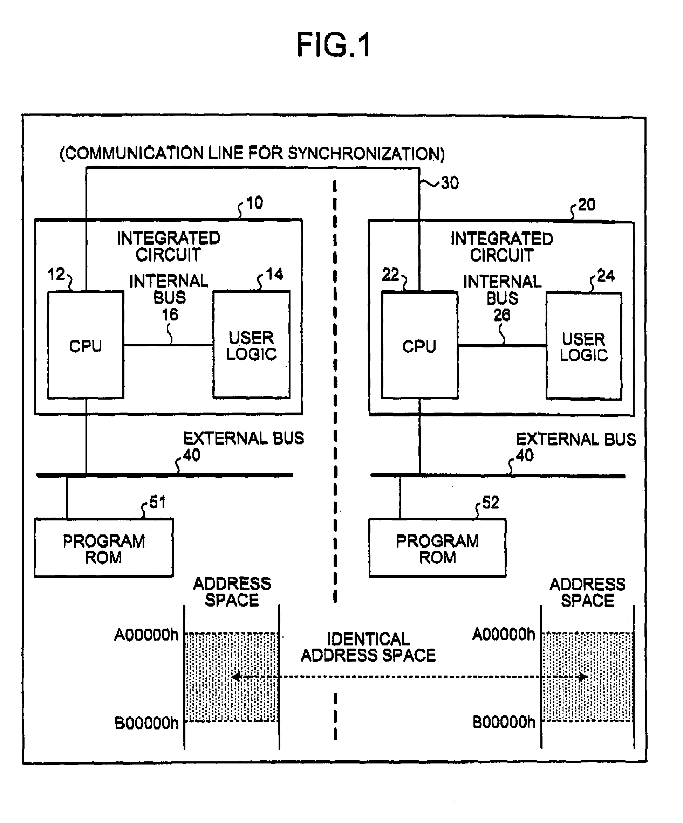

A conventional information processing device that includes a plurality of integrated circuits is explained with reference to Fig. 1. Fig. 1 is a block diagram of the conventional information processing device that includes the plurality of integrated circuits, and it also depicts an outline of an address space.

As shown in Fig. 1, the conventional information processing device includes a plurality of (two) integrated circuits 10 and 20 that are interconnected via a synchronous communication line 30. The integrated circuit 10 includes a CPU 12 (22), a user logic 14 (24), and an internal bus 16 (26) that connects all these components. Similarly, the integrated circuit 20 includes a CPU 22, a user logic 24, and an internal bus 26 that connects all these components. In this manner, when a plurality of integrated circuits 10 and 20 are used, to synchronize the parallel processing of both the CPUs 12 and 22, the synchronous communication line 30 connects the integrated circuits 10 and 20.

A process is executed by the integrated circuit 10 and the integrated circuit 20 by reading respective computer programs stored in a program read only memory (ROM) 51 and a program ROM 52.

As shown in Fig. 1, when both the CPUs (12, 22) control each of the user logics (14, 24) to execute the process, the CPUs (12, 22) use the same memory address space. An address managing method that can be employed when using the same memory address space is disclosed in Japanese Patent Laid-Open Application No. 2003-196251.

Japanese Patent Laid-Open Application No. 2003-196251 discloses a technology in which, respective control programs to be executed by a plurality of CPUs are stored, in a batch, in a memory that is arranged on a common bus. Each CPU reads data through the same address at the same time an identifying register reads identifying data assigned to the data.

However, in the information processing device disclosed in Japanese Patent Laid-Open Application No. 2003-196251, it is difficult to achieve synchronous control of parallel processing by the CPU. Moreover, it is necessary to develop separate control program for each CPU.

Particularly, in the integrated circuits of the information processing devices that are embedded in devices such as plasma displays, it is common to realize a user logic by using an Application Specific Integrated Circuit (ASIC), a Field Programmable Gate Array (FPGA) and the like to perform certain computational processing of a CPU, such as image computation function, that put a great burden on the CPU.

In recent years, image display technology has improved from Video Graphics Array (VGA) to Extended Graphics Array (XGA) and further to full display; so that there is a problem that a great load is put on the conventional user logic for performing image processing. One approach could be to connect, corresponding to one CPU, a plurality of user logics on one integrated circuit board. However, in this approach, each time number of user logics on the board is to be increased, it becomes necessary to change the design of the integrated circuit, and manufacture the new integrated circuit. Thus, this approach is not suitable for mass production.

Indecently, when plurality of integrated circuits, as in case of the integrated circuit device mentioned in Japanese Patent Laid-Open Application No. 2003-196251, are to be connected, it is necessary to develop complicated computer programs for parallel processing of each of the CPU, which creates a problem of increased cost.

### SUMMARY OF THE INVENTION

It is an object of the present invention to at least partially solve the problems in the conventional technology.

According to an aspect of the present invention, an information processing device includes a plurality of integrated circuits that are interconnected via an external bus. Each of the integrated circuits is structured to be connectable via an internal bus to a CPU, a user logic, and a bridge. The plurality of integrated circuits includes a master integrated circuit that controls other integrated circuits among the integrated circuits, and the other integrated circuit being slave integrated circuits with their CPUs being fixed to a reset state. The CPU of the master integrated circuit includes a user-logic control unit that controls the user logic of the slave integrated circuit via the external bus and the bridge of the slave integrated circuit; and an address managing unit that, when the user-logic control unit performs control of the user logic, manages a memory address space for the user logic of the slave integrated circuit as a separate memory space address.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of a conventional information processing device that includes plurality of integrated circuits, and it also depicts an outline of an address space; and
Fig. 2 is a block diagram of an example of a structure of the system applicable to an information processing device according to an embodiment of the present invention, and it also depicts an outline of memory space.

### DETAILED DESCRIPTION OF THE PREFERRED EMBODIMENTS

Exemplary embodiments of an information processing device according to the present invention are explained in detail with reference to the accompanying drawings; however, the invention is not limited to the embodiments.

Particularly, the embodiment below is explained with respect to an application in the field of image processing technology; however, the embodiment can be applied to other fields in the same manner.

General outline of the information processing device is explained below, and structure, process and the like of the information processing device are explained thereafter.

The information processing device generally has basic characteristics that are mentioned below. In other words, the information processing device includes a plurality of integrated circuits that are interconnected via an external bus. Each of the integrated circuits is structured to be connectable via an internal bus to a CPU, a user logic, and a bridge. Among the plurality of integrated circuits, one integrated circuit is set as a master integrated circuit that controls other integrated circuits, and the other integrated circuits are set as slave integrated circuits whose CPUs are fixed to a reset state. The CPU of the master integrated circuit controls user logics of the slave integrated circuits via the bridge and the external bus.

The term "user logic" as used herein indicates a logical computing means that is realized by a user by using a particular logical circuit other than the CPU on an integrated circuit such as ASIC and FPGA. For example, it is possible to use an image computing unit as the user logic.

The CPU of the master integrated circuit alone is used to control user logics of the integrated circuits and the CPU of the slave integrated circuits is fixed to a reset state. Therefore, one control program suffices the need and the control by the control program does not become complicated, resulting in an inexpensive formulation of the system. Furthermore, a communication line for synchronization of the master integrated circuit and the slave integrated circuits is not needed, and one ROM for storing control program is sufficient, which reduces expenditure on materials.

When the information processing device executes control by using a user logic control unit, it manages memory address space of the user logic of, the slave integrated circuits as a separate memory space.

By managing memory address space of the user logic of the slave integrated circuits as separate memory address spaces, it becomes possible to prevent competition among memory address spaces.

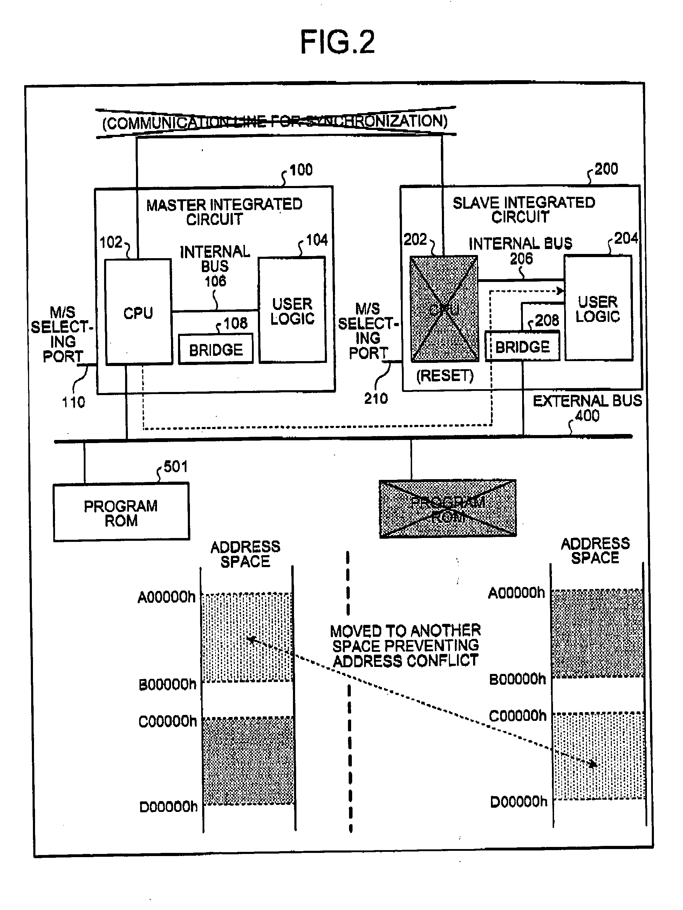

First, explanation is given about the structure of the system. Fig. 2 is a block diagram of an example of the structure of the system applicable to the information processing device, and it also depicts an outline of memory address space. Only the relevant parts of the structure of the information processing device are depicted in the outline of the structure. In this system, a master integrated circuit 100 and a slave integrated circuit 200 connected via an external bus 400 so that signal an transmitted among the master integrated circuit 100 and the slave integrated circuit 200.

As shown in Fig. 2, the master integrated circuit 100 basically includes a CPU 102 that executes overall control on the information processing device; a user logic 104 that can be customized or has been customized by a user; an internal bus 106 that connects the CPU 102 and the user logic 104 with each other on the master integrated circuit 100; a bridge 108 that reads the address of data, which is on the external bus 400 or on the master integrated circuit 100, and judges sending/receiving of the corresponding data; and a M/S (Master/Slave) selecting port 110 that selects either the master integrated circuit or the slave integrated circuit according to the need. The M/S selecting port 110 of the master integrated circuit 100 is set to "master" position, so that the CPU 102 boots as usual.

The CPU 102 is a device that conducts information processing by executing various processes according to control programs such as an operating system (OS) stored in a program ROM 501 or computer programs that specify procedures of various types of processes. The CPU 102 is set to control a plurality of the integrated circuits. Particularly, the CPU 102 functions as the user logic control means that controls a user logic 204 via the external bus 400 and a bridge 208, and as an address managing means that manages memory space addresses other than those used by the user logic 104.

The slave integrated circuit 200 includes a CPU 202; the user logic 204 that can be customized or has been customized by the user; an internal bus 206 that connects the CPU 202 and the user logic 204 with each other on the slave integrated circuit 200; the bridge 208 that reads the address of the data, which is on the external bus 400 or on the slave integrated circuit 200, and judges sending/receiving of the corresponding data; and a M/S (Master/Slave) selecting port 210 that selects either the master integrated circuit or the slave integrated circuit according to the need. The M/S selecting port 110 of the slave integrated circuit 200 is set to "slave" position, so that the CPU 202 is fixed to a reset state.

If the conventional technology is used, a communication line for synchronization is arranged between the master integrated circuit 100 and the slave integrated circuit 200 to perform synchronization control. However, in the slave integrated circuit 200, because the CPU 202 is fixed to a reset state, the communication line for synchronization, which is necessary in the conventional technology for synchronizing parallel processing, is not needed. Thus, expenditure on materials is reduced. Furthermore, there is no need to develop a computer program for controlling synchronization, which reduces the development cost as well.

The external bus 400 shown in Fig. 2 has a function of connecting with each other the master integrated circuit 100, the slave integrated circuit 200, the program ROM 501, and other parts.

The program ROM 501 stores the OS (operating system) and/or the computer programs that are used by the CPU 102 when performing various other processes

In the slave integrated circuit 200, because the M/S selecting port 210 is set such that the CPU 202 set to a reset state, there is no need to have a program ROM corresponding to the CPU 202 for parallel processing, and a cost-cut can be realized as compared to the conventional device shown in Fig. 1.

An example of the system processing according to the embodiment is explained below in detail.

A user logic control of controlling the user logic of the slave integrated circuit via the bridge and the external bus is explained below in detail.

Upon booting, the CPU 102 first judges whether the integrated circuit to which it belongs is the master integrated circuit or the slave integrated circuit. Because all the M/S selecting ports of the integrated circuits other than the master integrated circuit are set to "slave" position, and the CPUs in these integrated circuits are already in reset states, if a CPU boots normally, that CPU judges that it belongs to an integrated circuit that is the master integrated circuit.

The CPU 102 sends, among the data to be processed by user logics, the data that is to be processed by the user logic 104 of the master integrated circuit 100 to the user logic 104 via the internal bus 106, and sends the data that is to be processed by the user logic 204 of the slave integrated circuit 200 to the user logic 204 via the bridge 208 and the external bus 400.

For example, when the CPU 102 is to control the user logic 104 to process the data corresponding to right part of the screen out of the image processing data, and is to control the user logic 204 to process the data corresponding to left part of the screen out of the image processing data, the CPU 102 sends the data corresponding to the right part to the internal bus 106 and sends the data corresponding to the left part to the external bus 400.

With this, the user logic control process is completed. The sequence or contents of the process is not limited to the example mentioned above, and can be applied in another way such as sending an upper part of the image processing data to the internal bus 106 and sending a lower part of the image processing data to the external bus 400. Further, it is also possible to send an asymmetrical data to each other, taking into consideration process speed and transmission rate.

Next, explanation is given in detail about an address managing process.

When the CPU 102 is to control processing according to the user logic control unit, memory address space for the user logic of the slave integrated circuit is managed as a separate memory space address.

For example, the CPU 102 implements address management by treating the user logics of the master integrated circuit and the slave integrated circuit as if the user logics are on one substrate. In other words, as viewed from the CPU 102, the processing capacity of the user logic 104 expands by an amount equivalent to the processing capacity of the user logic 204, i.e., memory space available for allocation increases, which leads to prevention of allocation of identical addresses to different data (see lower part of Fig. 2).

With this, the address managing process is completed. As mentioned in the above example, the data that is allocated with addresses is processed according to an address offset process, and the data can be retrieved as image data that corresponds to the left or right position of the screen.

In conventional information processing devices, the number of computer programs usually required for controlling is equal to the number of integrated circuits that are to be controlled. However, the information processing device formed as described above suffices with having one controlling program regardless of the number of the integrated circuits, which reduces the development expenditure. Further, usually individual program ROMs are necessary for the number of integrated circuits. However, the information processing device formed as described above suffices with having one program ROM regardless of the number of the integrated circuits, which reduces the cost of materials. Moreover, one CPU is able to control all of the integrated circuits, because of which, as compared to the initialization of a plurality of CPUs, there is no need to do adjustment among those CPUs, which results in simplification of the controlling process.

The embodiments according to the present invention are explained above; however, the present invention is applicable to embodiments other than the embodiments mentioned above, and also to any other embodiments that come under the scope of the technological, philosophy of the claims.

Particularly, in the embodiments mentioned above, an example is described of a combination of one master integrated circuit with one slave integrated circuit. However, it need not be limited to the example, and one master integrated circuit can be in combination with more than two slave integrated circuits.

In addition, process steps, control steps, specific nomenclature mentioned in the specification and the diagrams can be arbitrarily changed if not otherwise specified.

Furthermore, each of the components of the configuration of the system that includes the master integrated circuit 100 and the slave integrated circuit 200 as shown in Fig. 2 are functional concepts, i.e., they are not necessarily physically configured as shown in the diagram.

Moreover, distribution and integration of the information processing device is not limited to the specific form shown in the diagram, all or part of it can functionally or physically be distributed or integrated based on arbitrary unit according to various types of loads.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An information processing device comprising a plurality of integrated circuits (100, 200) that are interconnected via an external bus (400), each of the integrated circuits (100, 200) being structured to be connectable via an internal bus (106, 206) to a CPU (102, 202), a user logic (104, 204), and a bridge (108, 208), wherein
the plurality of integrated circuits (100, 200) including a master integrated circuit (100) that controls other integrated circuits among the integrated circuits, and the other integrated circuit being slave integrated circuits (200) with their CPUs (202) being fixed to a reset state, the CPU (102) of the master integrated circuit (100) including
a user-logic control unit that controls the user logic (204) of the slave integrated circuit (200) via the external bus (400) and the bridge (208) of the slave integrated circuit (200); and
an address managing unit that, when the user-logic control unit performs control of the user logic (204), manages a memory address space for the user logic (204) of the slave integrated circuit (200) as a separate memory space address.
